Europäisches Patentamt

European Patent Office

Office européen des brevets

(19)

(11) Publication number: **0 187 410**
**A1**

## (12) EUROPEAN PATENT APPLICATION

(21) Application number: **85202005.6**

(22) Date of filing: **30.11.85**

(51) Int. Cl.⁴: **G 09 F 13/18**
**G 09 F 13/42**

(30) Priority: **12.12.84 GB 8431359**

(43) Date of publication of application:
**16.07.86 Bulletin 86/29**

(84) Designated Contracting States:
. **AT BE CH DE FR GB IT LI LU NL SE**

(71) Applicant: **Globetech Limited**
**P.O. Box 253 Sydney Vane House Rue du Commerce**
**St. Peterport Guernsey Channel Islands(GB)**

(72) Inventor: **Brandt, Rolet**
**Haarlemmerweg 201**
**NL-1051 LD Amsterdam(NL)**

(72) Inventor: **van Dijk, Rudy Johannes Ludwig**
**William Boothlaan 114**
**NL-1185 NT Amstelveen(NL)**

(74) Representative: **Kupecz, Arpad et al,**
**Octrooibureau Los en Stigter B.V. Postbox 20052**
**NL-1000 HB Amsterdam(NL)**

(54) Display device.

(57) The invention relates to a display device comprising a rigid, light transmitting body having a substantially larger dimension in a first direction than in at least one second direction essentially perpendicular to the first direction; a light transmitting carrier adjacent to at least part of the surface(s) of the body essentially perpendicular to the second direction; a luminescent pigment or pigment composition dispersed in said carrier; as well as at least one light source irradiating light in the body essentially in the first direction. This light source is an ultraviolet light emitting light source, whereas said light transmitting body is of a UV-light transmitting material and said luminescent pigment or composition comprises a fluorescent pigment.

fig.1

EP 0 187 410 A1

## Display device

The invention relates to a display device, in particular for displaying eye-catching informations. Said display device comprises a rigid, light transmitting body having a substantially larger dimension in a first direction than in at least one second direction essentially perpendicular to the first direction, a light transmitting carrier adjacent to at least part of the surface(s) of the body essentially perpendicular to the second direction; fluorescent or phosphorescent pigment or pigment composition dispersed in said carrier; as well as at least one light source irradiating light in the body essentially in the first direction.

Furthermore the invention relates to the assembly of the rigid, light transmitting body and the light source; as well as to the mixture of the light transmitting carrier and the fluorescent or phosphorescent pigment, taken either separately or in combination.

FR-A-1 028 118 discloses a display device of the above-mentioned kind. However, according to said French patent specification as light source a "lampe fluorescente tubulaire" is used, which is inherently not a UV-light source. As pigment or pigment composition according to said French reference use is made of e.g. commercially used pigments, such as aluminum dies, conventional lacquers and chromate lacquers. However, preferably a composition is used consisting of titanium bioxide, combined with the above-mentioned pigments. Titanium bioxide may be replaced by zink oxide. In order to obtain a white colour only titanium dioxide is used without any other coloured pigments.

However, it should be understood that the above-mentioned pigments are the usual luminescent pigments rather than fluorescent pigments, which means that the prior art pigments do not have fluorescent properties by irradiation with UV-light.

Furthermore it appears that the light intensitivity of the indicia obtained with the known device may be increased by the use of a dark background.

US-A-3 372 504 relates to an illuminating apparatus, comprising a pair of platelike reflectors each having a light reflecting surface on at least one side thereof. Said reflectors are positioned in spaced relationship with said reflecting surfaces facing one another. A light source is disposed between said reflectors. The light source comprises a plurality of elongated lamp means, having predetermined spectral emission characteristics, i.e. it includes a spectral emission of the ultra-violet through the visible blue portion of the spectrum. The indicia are in edge-lighted communication with the lighting means.

Patents Abstracts of Japan, vol. 4, no. 134, June 11, 1983, page 1279, Tokyo, JP; & JP-A-58 050 516 relates to a colour developing display panel. Said display panel comprises a light transmitting material (e.g. polyvinylpyrrolidone) containing a dispersed material (e.g. a stilbene fluorescent agent) which develops colour under ultraviolet rays, which material is applied to one side or both sides of a (coloured) transparent plastic plate (e.g. a polycarbonate resin plate) having 0.5 ~ 10 mm thickness and absorbing ultraviolet rays having shorter wavelengths than 370 mm. The irradiation occurs along one or both sides of the plastic plate rather than from the bottom of the plastic plate. In case that both sides are irradiated with the light coloured images of the colour developing material stuck to both sides can be observed.

DE-A-1 179 095 discloses a similar device as outlined in the afore-mentioned French patent specification 1 028.118. There is no UV-light used nor fluorescency.

GB-A-626 240 discloses a display device bearing inscriptions or designs to be viewed by illumination. The inscriptions or designs are scored in the supporting material, which scorings may be filled or coated with a fluorescent material.

Display devices of the present kind carry information of an informative or decorative character on their surface, which should be directly and easily observed by a spectator. Therefore it is desirable that this information strongly attracts attention by any optical effect and is specially striking relative to its environment. The present display devices will therefore be applied for advertising purposes, for signalling purposes in the broadest sense, more particularly for traffic applications, for toys, sports and games, in the artistic area and for technical purposes.

The desired optical effect for increasing the conspicuity of the message is usually achieved in the prior art display devices of the present kind by illumination with a light source for the visible region. The light source may be placed in front of the prior art display device, so that the spectator observes the rays of light reflected by the message. However, the light source may also be placed behind the display device, in which case the body of the display device is transparent or transmitting some colours in at least some of its areas.

These prior art display devices suffer from the disadvantage that they necessarily are of a rather large depth in the direction of the observer, because the light source should be placed before or behind the per se flat body of the display device. Furthermore these prior art display devices require a relatively large amount of energy relative to the optical yield, since the entire surface of the body of the display device must be illuminated.

The present invention aims to provide a display device, as described above, offering a specially striking display of the disseminated message with a low energy consumption. Furthermore the invention aims to provide a display device of small depth, thus allowing for a flat attachment to a wall.

The above aims are achieved according to the invention with a display device comprising a rigid, light transmitting body having a substantially larger dimension in a first direction than in at least one second direction essentially perpendicular to the first direction; a light transmitting carrier adjacent to at least part of the surface(s) of the body essentially perpendicular to the second direction; a fluorescent or phosphorescent pigment or pigment composition dispersed in said carrier; as well as at least one light source irradiating light in the body essentially in the first direction, characterized in that said light source is an ultraviolet light emitting light source, whereas said light transmitting body is of a UV-light transmitting material and said

carrier comprises a fluorescent pigment.

Since the light source of the display device according to the invention emits rays of light transversally to a short dimension of the body, the depth of the total display device is almost limited to this short dimension contrary to the prior art display device, wherein the light source is placed before or behind the body. In the display device according to the invention it is further achieved, that most of the light sent laterally in the body leaves the body exclusively at the interfaces with the light transmitting carrier, so that a concentration of light occurs in the areas of the surface of the body representing the message of the display device. To this end the phenomenon is used that at an interface of the materials of different refraction indices light may only leave the material of higher refraction index, if the angle of incidence, it means the angle between the ray of light and the normal to the interface, does not surpass the limiting angle $\phi$. This limiting angle $\phi$ is determined by the relation between the refraction indices of the material at the wave length of the light ray concerned. Because of the shape of the present display device – in case the body is of glass or a plastic as perspex, the angle of incidence of the skimmingly incident light will practically always be larger than the limiting angle between glass and air, so that the rays of light are completely reflected at the surface areas of the body which are not covered with the light transmitting carrier. If the refraction index of the carrier is larger than that of the body or is at least not considerably smaller the light skimmingly striking the interfaces between the body and the light transmitting carrier, however, will be able to leave the body, because in that case the limiting angle $\phi$ is non-existent or at least approaches 90°.

Therefore the difference between the refraction index of the body and the refraction index of the carrier is smaller than 1/3 of the difference between the refraction index of the body and the refraction index of air

$$0 \leqslant |n_{body} - n_{carrier}| \leqslant \frac{n_{body} - n_{air}}{3}$$, or in that the refraction index of the carrier > refraction index of the body.

According to a further preferred embodiment of the invention the end sides of the body through which no light is sent in the body, are provided with mirror elements. By this feature it is achieved that rays of light striking an interface between the body and air will be reflected at the end of the body until finally they will leave the body through an interface between body and light transmitting carrier.

However, the end sides of the body through which no light is sent into the body advantageously may be covered with a fluorescent paint in order to obtain additional illumination at said end sides.

The light striking the areas of the surface of the body covered with the light transmitting carrier will continue its path more or less rectilineary at the interface and will hit a luminescent pigment particle dispersed in the carrier. Thereby a present active atom, molecule or center is excited and subsequently will emit a part of the received energy in all directions in the form of radiation of longer wave length. In that way at least the part of the emitted light directed to an observer in front of the display device will strike the interface between the light transmitting carrier and air more or less perpendicularly because of the incurred change of direction and be able to escape. The observer observes the message disseminated by the display device as if the latter is illuminated with high intensity from behind. Therewith the uncovered surface areas of the body seem to be dark.

As mentioned before the light source of the display device according to the invention emits light in the ultraviolet region, having such wave lengths which may excite a large variety of fluorescent materials fluorescing in the whole visible spectrum. Furthermore the minor part of ultraviolet light eventually escaping at the uncovered surface areas of the body is not visible to the eye, so that the strong contrast between the shining pattern and the dark background is secured, which is favourable for the conspicuity of the represented message.

The body of the display device according to the invention may in principle be of any rigid, light transmitting material, such as for example glass or a (meth)acrylate resin. Many of such materials, however, show a considerable absorptive power for ultraviolet light and therefore are less desirable when using a light source emitting ultraviolet light. Consequently it is preferred that the body is of an ultraviolet transmitting resin. Some vitreous materials, such as quartz, or other UV-transmitting glasses, may though transmit UV-light as well, but are far too expensive in practice.

The body of the display device according to the invention may be of any shape, (e.g. flat or bended) provided that a first and a second direction as defined above may be defined therein. Practically a flat plate having any height and width and a considerably smaller thickness is particularly suitable, in which case it is indifferent whether the light is irradiated lengthwise or crosswise. The front surface of such a plate is available for the application of the luminescent pigment containing carrier in a desired pattern, which is represented very luminously upon activation of the light source.

On the other hand the body may also be shaped as a thread, in which case a narrow light beam is irradiated in one end of the thread by means of a point-shaped light source, for example a laser, and the light transmitting carrier, containing the pigment is applied to part of the cylindrical surface of the thread. The irradiated light will mainly only be able to leave the thread through the applied carrier, also when the thread is not stretched straightly, but shows some curvature. Such an embodiment of the display device according to the invention would seem in the first place applicable for technical purposes, wherein the transportation of the light beam through the thread is the main aim and the shining patterns are applied as marks for control purposes.

The light transmitting carrier of the display device according to the invention may be any suitable transparent binder for pigments, such as well-known in the art of paint making. Such binders having a liquid or pasty sonsistency in mixture with pigments may be applied to the body using common methods as brushing, screen printing etc.,and subsequently be hardened, or dried.

According to a specially favourable embodiment of the invention the light transmitting carrier consists of a siloxane or silicone resin. Such a siloxane or silicone resin is available in the form of a kit hardable in the air, which is very suitably workable and may be shaped in many shapes (flat, thread, profiles and the like) and may be applied at choice to adherent or release surfaces. Such a mixture of silicone kit and luminescent pigments according to the invention has an inherent standing ability on horizontal and vertical planes up to about 40 mm and may be cured at the air without the necessity of heating. After curing the material exhibits an elongation of 500%. Moreover it has appeared that the silicone resin shows a protective effect towards the luminescent pigments which are per se relatively instable. Therefore any replacement of the applied pattern due to the exhaustion of the luminescent pigment is less frequently required than usual. As, however, replacement will be necessary from time to time and further some users will like to change the message of the applied pattern from time to time for other reasons, the self-supporting nature of the silicone resins in cured state is an additional favourable property, when it is applied to a release surface and may be simply removed therefrom.

In addition it may be desirable that the carrier has a varying thickness resulting in the modification of the original colour from primair to pastel.

The luminescent pigment or pigment composition being present according to the invention in the light transmitting carrier must comprise both fluorescent and phosphorescent pigments or either one of these, as these pigments are known from the relevant technical literature. In this context fluorescent pigments are considered to be pigments instantaneously emitting the received energy as light (i.e. within about 1 ms), whereas the phosphorescent pigments will emit light during a longer period up to some hours after absorption of the energy. Fluorescent or phosphorescent pigments or pigment compositions for any desired colour of the emitted light are known, whereas the man of the art is also considered to be able to adjust simply the desired brightness and colour shade by a proper choice of concentrations, combination of pigments/additives and such.

Exemplary but not as limitation the following suitable fluorescent or phosphorescent pigments may be mentioned: inorganic pigments as zinc sulfide, calcium tungstate, magnesium tungstate, zinc silicate, calcium halogen phosphates, calcium silicate and calcium phosphate, eventually doped with copper, silver or manganese, as well as organic pigments as anthracene, naphthacene and phtaleine derivatives.

Because of the fluorescent pigment of the luminescent pigment composition, the latter may also have a shining effect at daylight. Exemplary for such pigments are some acridine derivatives, xanthene derivatives, as fluoresceine and rhodamine, thioxanthene derivatives and pyrenes.

Particularly when applying a silicone resin as carrier, which may be applied to the body of the display device in a thick layer or in profiles, the shining effect may be reinforced in that way. Also the daylight striking skimmingly the front surface of the display device according to the invention will then hit a larger surface of the profiles of the carrier containing the daylight fluorescent pigment on the surface than in case of a flat pattern. By the dispersion in all directions at the pigment the skimmingly incident daylight will also be deflected in the direction of the observer, which does not occur in case of a flat pattern.

As is to be appreciated from the preceding description of a ready display device according to the invention it is prepared by applying in a desired pattern on an assembly of a rigid, light transmitting body and a light source a mixture of a light transmitting carrier and a luminescent pigment or pigment composition having still a liquid or pasty consistency. Since the nature of the pattern to be applied is finally to the discretion of the user and is usually not known to the manufacturer of the display device, the invention also comprises said assembly on the one hand and said mixture on the other, either separately packaged or as combination or set, to be purchased as such by the final user. For the above reasons such a mixture according to the invention preferably comprises a poly siloxane or silicone kit and a luminescent pigment or pigment composition.

The invention will be further elucidated on base of the annexed drawing and an example of a composition for a mixture according to the invention of a poly siloxane or silicone kit and a luminescent pigment or pigment composition.

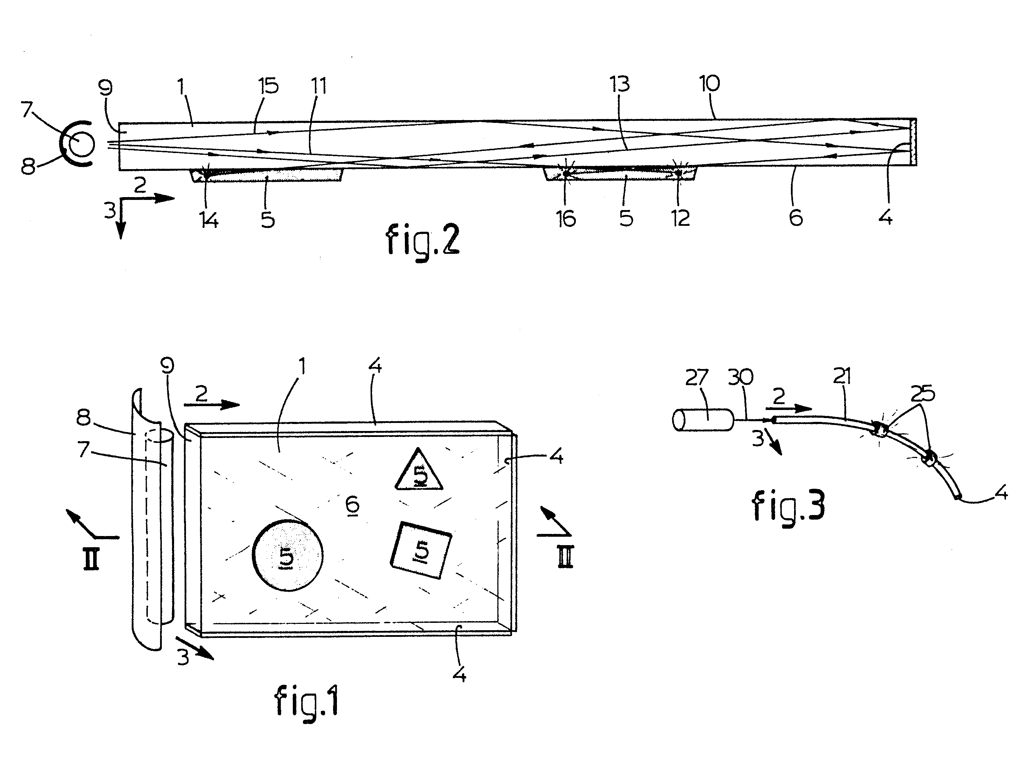

In the drawing fig. 1 shows a schematic view of a first embodiment of the display device according to the invention.

Fig. 2 is a cross section according to line II-II of fig. 1, wherein exemplary the paths of some rays of light are indicated.

Fig. 3 shows a view of a second embodiment of the display device according to the invention.

Fig. 1 shows a rigid, light transmitting body 1 in the shape of a plate. The first direction of this body defined before is indicated in the figure by arrow 2 and corresponds with the length direction of the plate in this case, whereas the second direction defined before is indicated by arrow 3 and corresponds to the thickness of the plate. Three lateral sides, the upper side, the right side and the lower side in the figure, are provided with mirror elements 4. On the front surface 6 of the body areas 5 consisting of the light transmitting carrier wherein the luminescent pigment or pigment composition is dispersed, are applied in a desired pattern.

Left to the body 1, besides the uncovered lateral side 9, a light source 7 having suitable shape is arranged by means of fastening means (not shown). In the given case the light source 7 is elongate and is electrically fed with non-shown means. Behind the light source 7 a reflector 8 is mounted in order to irradiate most of the light from the light source 7 in the body 1 in the first direction 2.

The working of the present display device will now be discussed on base of the cross section according to the line II-II of fig. 1 as shown in fig. 2. This fig. 2 shows areas 5 applied to the front surface 6 of the body 1, which comprise the light transmitting carrier wherein pigment particles 12, 14, 16 are dispersed. Furthermore it appears from this figure that the interface between the body 1 and the carrier 5 is perpendicular to the second direction 3 and parallel to the first direction 2. The light source 7 arranged to the left of the body 1 irradiates rays of light parallel or virtually parallel to the second direction 2 in the body 1, being supported by the reflector 8, Three rays of light 11, 13, 15 are shown as example.

The first ray of light 11 strikes the front surface 6 of the body 1 at an interface between the body and the carrier applied thereto and passes this interface more or less rectilinearly because of the relatively small difference between the refraction indices of both materials. In the area 5 this ray of light 11 hits a pigment particle 12 which is excited and subsequently emits light in all directions.

The second ray of light 13 strikes the front surface 6 of the body 1 at an uncovered place under an angle of incidence being larger than the limiting angle for the material of the body and air and therefore is completely reflected and subsequently strikes the mirror element 4 applied to the opposite lateral side, at which place it is again reflected and whereupon this ray of light 13 will finally strike the left area 5 through the back surface 10 of the body. After a more or less rectilinear passage of the interface between the body and the carrier it will hit and excite the pigment particle 14, which in turn will emit light in all directions.

The third ray of light 15 is reflected at the back surface 10 and reaches through the mirror element 4 the right area 5, wherein the pigment particle 16 is excited.

It will be apparent from the illustrated paths of beams for the given three examples that the major part of the irradiated light will exclusively leave the body through the areas 5 and will therefore be visible for an observer in front of the display device. The light emitted by the pigment particles 12, 14, 16 in the direction of an observer will pass the interface between the carrier and air under a small angle of incidence and will therefore be able to pass this interface. If the light source 7 is a UV-light source the irradiated invisible UV-light will be shifted by the pigment particles 12, 14, 16 to longer, visible wave lengths, in the whole visible range.

Fig. 3 shows a second embodiment of the display device according to the invention. Herein the body 21 has the shape of a thread, carrying on its cylindrical surface areas 25 of the carrier containing the luminescent pigment or pigment composition. The first direction 2 corresponds to the length direction of the thread shaped body 21, whereas the second direction 3 is any perpendicular to the axis of the thread. The light source comprises in this case a 0187410 schematically indicated laser source 27, which irradiates a single ray of light or narrow light beam 30 in one end of the thread shaped body 21. For a limited curvature of the thread 21 the irradiated light will only be able to leave at places where the thread is covered with the areas 25. At the opposite end the thread 21 is provided with a mirror element 4.

### Example

An example of a composition for an uncured mixture according to the invention which for example may be applied in a desired pattern to the surface of a plate by means of extrusion and may be cured at the air at ambient temperature is the following:

| | | |
|---|---|---|
| dihydroxy poly dimethyl siloxane | 55 - 64 | % |
| dimethyl poly dimethyl siloxane | 26 - 35 | % |
| acetoxy silane | 4 | % |
| pyrogenic silica | 8 | % |
| dibutyl tin dilaurate | 0,3 | % |
| luminescent pigment or pigment composition | 0,5 - 8 | %. |

This composition is especially suitable for the following fluorescent or phosphorescent pigments: amino naphthalimide rhodamine, included in formaldehyde resin, phtalocyanine, zinc sulfite, cadmium sulfite, copper activated calcium sulfite and ferrite. Also an optical brightener may be included in this composition.

1. Display device comprising a rigid, light transmitting body having a substantially larger dimension in a first direction than in at least one second direction essentially perpendicular to the first direction; a light transmitting carrier adjacent to at least part of the surface(s) of the body essentially perpendicular to the second direction; a luminescent pigment or pigment composition dispersed in said carrier; as well as at least one light source irradiating light in the body essentially in the first direction, c h a r a c t e r i z e d  in that said light source is an ultraviolet light emitting light source, whereas said light transmitting body is of a UV-light transmitting material and said luminescent pigment or composition comprises a flourescent pigment.

2. Display devic according to claim 1, c h a r a c t e r i z e d  in that said UV-light transmitting material is an appropriate organic resin.

3. Display device according to claim 1, c h a r a c t e r i z e d  in that said UV-light transmitting material is of quartz, or other UV-transmitting glasses.

4. Display device according to claim 1 - 3, c h a r a c t e r i z e d  in that the difference between the refraction index of the body and the refraction  index of the carrier is smaller than 1/3 of the difference between the refraction index of the body and the refraction index of air

$$0 \leqslant |n_{body} - n_{carrier}| \leqslant \frac{n_{body} - n_{air}}{3},$$ or in that the refraction index of the carrier $>$ refraction index of the body.

5. Display device according to claims 1 - 4, c h a r a c t e r i z e d  in that said fluorescent or phosphorescent pigment is selected from inorganic pigments such as zinc sulfide, calcium tungstate, magnesium tungstate, zinc silicate, calcium halogen phosphates, calcium silicate or calcium phosphate optionally doped with copper, silver or manganese.

6. Display device according to claims 1 - 4, c h a r a c t e r i z e d  in that said fluorescent pigment is selected from organic pigments such as anthracene, naphthacene or phtaleine derivatives.

7. Display device according to claims 1-6, c h a r a c t e r i z e d in that said luminescent pigment composition comprises both fluorescent and phosphorescent pigments.

8. Display device according to claims 1-7, c h a r a c t e r i z e d in that said light transmitting carrier consists of a siloxane or silicone resin.

9. Display device according to claim 1-8, c h a r a c t e r i z e d in that said carrier has a varying thickness.

10. Display device according to claims 1-9, c h a r a c t e r i z e d in that said light transmitting body is shaped as a plate, which may be flat or bended.

11. Display bevice according to claims 1-9, c h a r a c t e r i z e d in that said light transmitting body is shaped as a thread.

12. Display device according to claims 1-11, c h a r a c t e r i z e d in that said surface(s) of the body parallel to the second direction, through which no light is irradiated, are provide with mirror elements (4).

13. Display device according to claims 1-11, c h a r a c t e r i z e d in that said surface(s) of the body parallel to the second direction, through which no light is irradiated, are provided with a fluorescent paint.

14. Display device according to claims 1-13, c h a r a c t e r i z e d in that said light transmitting carrier containing the fluorescent or phosphorescent pigment is applied according to a decorative or informative pattern.

15. Assembly of a rigid, light transmitting body and a light source as defined in one of the preceding claims.

16. Mixture of a light transmitting carrier and a fluorescent pigment or pigment compositon as defined in one of the preceding claims, the mixture being in the form of a pastel or liquid curable by exposure to the air.

17. Mixture according to claim 16 of a poly siloxane or silicone kit and a fluorescent pigment or pigment composition.

18. Combination af an assembly according to claim 15 and a mixture according to claim 16 or 17.

fig.2

fig.1

fig.3

0187410

0187410

European Patent
Office

**EUROPEAN SEARCH REPORT**

Application number

EP 85 20 2005

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,Y | US-A-3 372 504 (G.K.C. HARDESTY) <br> * Claims 7,10-12; column 4, line 26 - column 5, line 37; column 5, line 69 - column 6, line 13; figures 1-3 * | 1 | G 09 F 13/18 <br> G 09 F 13/42 |
| D,Y | GB-A- 626 240 (A.W. ROBINSON) <br> * Claims 1-3; page 1, lines 17-80; page 3, lines 28-90; figures 1-3 * | 1 | |
| A | | 2,10 | |

|  | TECHNICAL FIELDS SEARCHED (Int. Cl.4) |
|---|---|
|  | G 09 F |

The present search report has been drawn up for all claims

| Place of search | Date of completion of the search | Examiner |
|---|---|---|
| THE HAGUE | 29-04-1986 | FRANSEN L.J.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82